Europäisches Patentamt

European Patent Office

Office européen des brevets

(19)

(11) Veröffentlichungsnummer: **0 023 246**

**A1**

(12) # EUROPÄISCHE PATENTANMELDUNG

(21) Anmeldenummer: 80102853.1

(22) Anmeldetag: 22.05.80

(51) Int. Cl.³: **F 16 D 3/80**

(30) Priorität: 26.07.79 DE 2930244

(43) Veröffentlichungstag der Anmeldung:
04.02.81 Patentblatt 81/5

(84) Benannte Vertragsstaaten:
BE FR GB IT SE

(71) Anmelder: Boge GmbH
Bogestrasse 50
D-5208 Eitorf/Sieg(DE)

(72) Erfinder: Hamaekers, Arno, Dipl.-Ing.
Brunhildstrasse 27
D-6944 Hemsbach(DE)

(54) **Drehelastische Kupplung.**

(57) Eine drehelastische Kupplung zur Verbindung zweier im wesentlichen fluchtend zueinander angeordneten Wellen, bestehend aus einem metallischen, sternförmig mit radial nach außen sich erstreckenden Mitnehmeransätzen (4, 5, 6, 7) versehenen Innenteil, einem konzentrisch mit Abstand dieses umgebenden hülsenförmigen metallischen Außenteil (8) und einem zwischen Innenteil und Außenteil verhafteten Gummi-Federelement (9), in welchem mit einem Dämpfungsmittel gefüllte, insbesondere hydraulisch über einen oder mehrere jeweils eine Drosselstelle bildende Überströmkanäle (17) miteinander verbundene volumenveränderliche Kammern (16) ausgespart sind. Die Kammern (16) sind nach einer Stirnseite hin offen und an dieser Stirnseite der oder die Überströmkanäle (17) ausgebildet, und diese Stirnseite ist durch einen nach dem Befüllen der Kammern (16) mit dem Dämpfungsmedium angebrachten Deckel (11) dicht verschlossen.

Fig.2

EP 0 023 246 A1

- 1 -

## Drehelastische Kupplung

Die Erfindung betrifft eine drehelastische Kupplung zur Verbindung zweier im wesentlichen fluchtend zueinander angeordneter Wellen, bestehend aus einem metallischen, sternförmig mit radial nach außen sich erstreckenden Mitnehmeransätzen versehenen Innenteil, einem konzentrisch mit Abstand dieses umgebenden hülsenförmigen metallischen Außenteil und einem zwischen Innenteil und Außenteil verhafteten Gummi-Federelement, in welchem mit einem Dämpfungsmedium gefüllte, insbesondere hydraulisch über einen oder mehrere jeweils eine Drosselstelle bildende Oberströmkanäle miteinander verbundene Kammern ausgespart sind.

Es wurde ein als drehelastische Kupplung verwendbares hydraulisch dämpfendes Gummilager vorgeschlagen, welches aus einem Innenrohr, einem konzentrisch oder exzentrisch dazu mit Abstand angeordneten Außenrohr und dazwischen eingesetztem Gummiteil besteht, in welchem mit einem Dämpfungsmedium gefüllte, hydraulisch über eine Drosselstelle miteinander verbundene Kammern in Form von Hohlräumen des Gummiteils ausgebildet sind. Hierbei sind die Kammern radial

nach außen im Gummiteil offen und durch das übergezogene Außenrohr nach Füllung mit dem Dämpfungsmedium abgeschlossen. Stirnseitig wird der Kammerabschluß durch das Gummi-Federelement geschaffen.
Die notwendigen Überströmkanäle, die die Verbindung
der Kammern untereinander herstellen, sind dabei
umfangsseitig am Außenrohr vorgesehen. Zur Erzeugung der Volumensveränderung in den Kammern und
damit des für die Dämpfung notwendigen Pumpeffekts
sind dabei entweder in den mit dem inneren Rohr
verbundenen Speichen Armierungen oder aber abwechselnd am Innenrohr und am Außenrohr besonders
dicke und damit relativ unbewegliche Anbindungen
der reinen Gummispeichen vorgesehen.

In der Anwendung des vorgeschlagenen Gummilagers
als drehelastische Kupplung ist es bei der Ausführungsart mit armierten Speichen am Innenrohr
nachteilig, daß definierte Drosselverhältnisse
bei einer Umschichtung des Dämpfungsmediums zwischen
den Kammern vor allem dann nicht gegeben sind,
wenn überlagerte radiale oder kardanische Belastungen
vorliegen. Beiden Ausführungsarten sind ferner gemeinsam, daß die Bewegungsverhältnisse der Speichen
untereinander relativ undefiniert und druckabhängig sind, wodurch die erzielbare Rotationsdämpfung
gering bleibt.

Nachteilig sind ferner die an den Stirnseiten befindlichen großen freien Gummioberflächen, die zu
einem Blähen neigen und das Pumpverhalten beeinträchtigen. Schließlich wird die wirtschaftliche
Herstellung dadurch beeinträchtigt, daß nur eine
zeit- und werkzeugintensive radiale Entformung

- 3 -

nach Durchführung des Vulkanisationsvorgangs möglich ist.

Der Erfindung liegt die Aufgabe zugrunde, unter Vermeidung der aufgezeigten Nachteile eine drehelastische Kupplung der eingangs genannten Art bei Vereinfachung der Herstellung derart zu verbessern, daß in allen Beanspruchungsfällen definierte Drosselverhältnisse gegeben sind, das hydraulische Verhalten stabil, das spezifische Pumpvolumen hoch und bei gleichbleibenden übertragbaren Drehmomenten eine kompaktere Bauausführung möglich ist.

Die Aufgabe ist erfindungsgemäß dadurch gelöst, daß die Kammern nach einer Stirnseite hin offen und an dieser Stirnseite der oder die Oberströmkanäle ausgebildet sind und daß diese Stirnseite durch einen nach dem Befüllen der Kammern mit dem Dämpfungsmedium angebrachten Deckel dicht verschlossen ist. Durch die im Gummiteil stirnseitig offenen Kammern mit dort ausgebildeten Oberströmkanälen ist bei wesentlich vereinfachter Entformbarkeit und damit Herstellung die Möglichkeit gegeben, eine aufgrund der größeren Pumpfläche verbesserte Dämpfung und hydraulische Stabilität zu erreichen. Bei gleichem übertragbarem Drehmoment ist eine kompaktere Bauweise gegeben.

Insbesondere ist gemäß einer zweckmäßigen Ausgestaltung der Erfindung bevorzugt, daß das metallische Außenteil sternförmig mit radial nach innen sich erstreckenden Mitnehmerflügeln versehen ist, die zwischen je zwei Mitnehmeransätzen des Innenteils angeordnet sind, daß Mitnehmeransätze und -flügel als Teil des Gummi-Federelements in Form von radialen Speichen verlängert und durch Vulkanisation mit einem Elastomer mit dem Außenteil und Innenteil unter Ausbildung der Kammerwände verbunden sind, und daß die dem Deckel gegenüberliegende geschlossene Stirnwand als dickwandiger Gummiabschluß geformt ist, der mit einem metallischen Befestigungsflansch verhaftet ist. Diese Ausbildung hat den Vorteil, daß die Kammerwände durch die in radialer Richtung sich erstreckenden Mitnehmeransätze und Mitnehmerflügel sämtlich armiert sind und damit ein weitgehend definiertes hydraulisches Verhalten unter Belastung gegeben ist. Insgesamt wird auch die Haltbarkeit der Kupplung hierdurch verbessert.

Der oder die Oberströmkanäle können im Deckel und/oder in den Mitnehmerflügeln als umlaufende Einprägungen ausgebildet sein, wobei sämtliche Kammern miteinander oder einzelne Kammern paarweise kommunizieren.

Dabei ist es von Vorteil, mindestens drei gleichmäßig versetzt zueinander angeordnete Mitnehmeransätze und -flügel vorzusehen und aufgrund der radialen gegenläufigen Erstreckung von Mitnehmeransätzen und -flügeln einen Überlappungsbereich der Armierungen zu bilden. Anstelle der gleichmäßigen Ausbildung kann es in bestimmten Anwendungsfällen auch zweckmäßig sein, die Kammern hinsichtlich der beiden Drehrichtungen unterschiedlich auszubilden.

Zweckmäßigerweise ist hierzu vorgeschlagen, an den Kammerwänden insbesondere den Mitnehmeransätzen

- 5 -

oder -flügeln, elastische Gummianschläge zur Wegbegrenzung, vorzugsweise in Form von Vorsprüngen,
vorzusehen. Diese können in beiden Drehrichtungen
gleich oder unterschiedlich ausgebildet sein,
wobei eine asymmetrische Gestaltung dann gewählt
werden wird, wenn in der bevorzugten Drehrichtung
die Anschlagwirkung spät und in der rückwärtigen
Drehrichtung die Anschläge früher zur Anlage an
der entsprechenden Kammerwandung kommen sollen.

Weitere Einzelheiten, Merkmale und Vorteile des
Gegenstandes der Erfindung ergeben sich aus der nachfolgenden Beschreibung der zugehörigen Zeichnung,
in der schematisch verschiedene Ausführungsformen einer erfindungsgemäßen drehelastischen
Kupplung dargestellt sind. In der Zeichnung zeigt:

Figur 1 eine drehelastische Kupplung im Querschnitt
gemäß Linie I - I der Figur 2,

Figur 2 die drehelastische Kupplung der Figur 1
im Längsschnitt gemäß Linie II - II,

Figur 3 eine geänderte Ausführungsform einer drehelastischen Kupplung im teilweisen Querschnitt
III - III aus Figur 4 und

Figur 4 die Kupplung der Figur 3 im teilweisen Längsschnitt IV - IV.

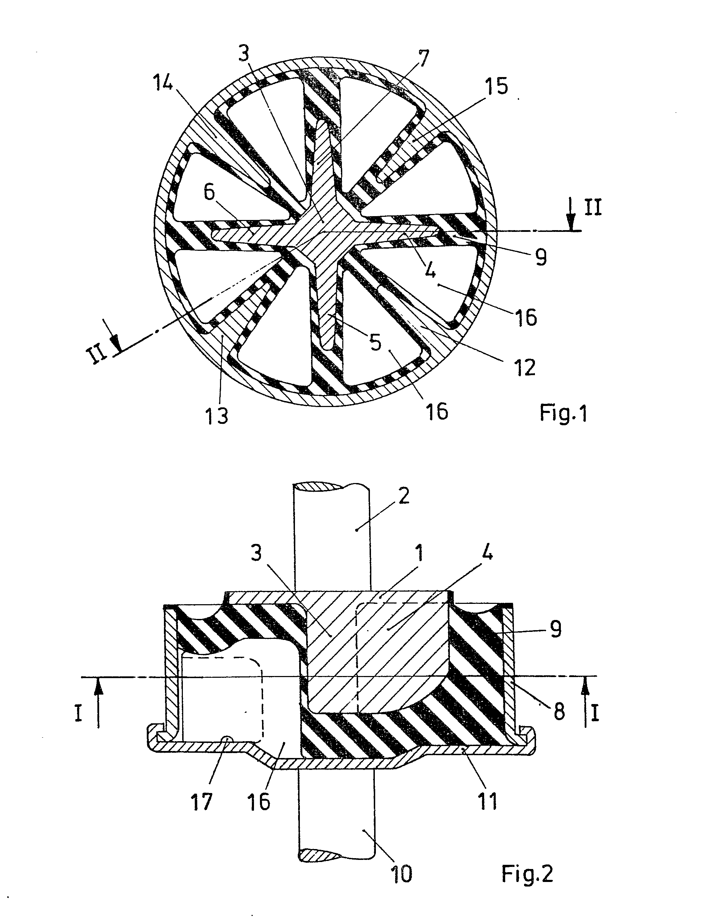

Die Kupplung nach den Figuren 1 und 2 besteht aus
einem mit einem Befestigungsflansch 1 für eine
Welle 2 versehenen Nabenkörper 3, der ein metallisches Innenteil der Kupplung darstellt und stern-

./6

förmig mit vier radial nach außen sich erstreckenden Mitnehmeransätzen 4, 5, 6, 7 versehen ist, sowie aus einem konzentrisch mit Abstand zu dem Nabenkörper 3 angeordneten hülsenförmigen metallischen Außenteil 8, welcher mit dem Innenteil durch ein GummiFederelement 9 fest verbunden ist. Diese Kupplung verbindet die Welle 2 drehelastisch mit einer Welle 1o, welche an einem metallischen Deckel 11 befestigt ist, der die dem Befestigungsflansch 1 gegenüberliegende Stirnseite der Kupplung dicht abschließt.

Die Mitnehmeransätze 4, 5, 6, 7 am Nabenkörper 3 erstrecken sich in radialer Richtung nach außen über den halben Radius des Gesamtradius hinaus und in Längsrichtung flächig nach Art von Speichen bis kurz vor dem Deckel 11. Sie sind von dem GummiFederelement 9 umgeben und nach außen bis zum hülsenförmigen Außenteil 8 und in Längsrichtung bis zum Deckel 11 verlängert. In gleichartiger Weise ist das Außenteil 8 sternförmig mit radial nach innen sich erstreckenden Mitnehmerflügeln 12, 13, 14, 15 ausgestattet, die zwischen je zwei Mitnehmeransätzen des Nabenkörpers 3 in gleichmäßiger Verteilung angeordnet sind und in das Gummi-Federelement 9 derart eingebettet sind, daß eine speichenartige Verbindung zwischen dem Außenteil 8 und dem Nabenkörper 3 hergestellt ist. Die Länge der Erstreckung der Mitnehmerflügel 12, 13, 14, 15 radial nach innen ist derart gewählt, daß zu den jeweils benachbarten Mitnehmeransätzen 4, 5, 6, 7 eine Oberlappung gegeben ist, die das hydraulische Verhalten der Kupplung günstig beeinflußt.

- 7 -

Das Gummi-Federelement 9 wird mit dem Befestigungsflansch 1, dem Nabenkörper 3, den Mitnehmeransätzen
4 bis 7, dem Außenteil 8 und den Mitnehmerflügeln
12 bis 15 in einem zusammenhängenden Arbeitsgang
vulkanisiert, wobei eine axiale Entformbarkeit
gegeben ist. Es werden in dem Gummi-Federelement 9
insgesamt acht volumenveränderliche Kammern 16 ausgespart, die zur einen Stirnseite der Kupplung hin,
nämlich der durch den Deckel 11 verschlossenen Stirnseite, im Herstellungsvorgang zunächst offen sind.
Die dem Deckel 11 gegenüberliegende geschlossene
Stirnwand ist als dickwandiger Gummiabschluß ausgebildet und mit dem metallischen Befestigungsflansch
1 verhaftet. Zur Verbindung der einzelnen Kammern 16
untereinander ist an der offenen Stirnseite des
Gummi-Federelements 9 ein als umlaufende Ringnut
ausgebildeter Oberströmkanal 17 vorgesehen, der
nach Fertigstellung der Kupplung frei bleibt und
eine Kammerverbindung darstellt, welche der Durchströmung eines Dämpfungsmediums einen vorbestimmten
Strömungswiderstand entgegensetzt. Nach Befüllung
der Kammern 16 mit einem Dämpfungsmedium, welches in
der Regel flüssig ist, jedoch auch gasförmig sein
kann, wird der Deckel 11 gegen die Federwirkung des
Gummi-Federelements 9 durch Umbördelung dicht mit
dem Außenteil 8 verbunden, wodurch die Kammern 16
nach außen verschlossen werden.

Bei der Obertragung von Drehmomenten von der Welle
2 auf die Welle 1o treten elastische Verformungen
des Gummi-Federelements 9 auf, so daß die Volumina
der dämpfungsmittelgefüllten Kammern 16 sich verändern. Je nach Drehrichtung vergrößert sich jeweils auf der einen Seite einer "Speiche" die Kammer und verringert sich gleichzeitig die auf der anderen Seite der "Speiche". Dabei findet ein Dämpfungsmediumaustausch durch die verbindende Ringnut 17 zwischen den Kammern statt. Der Strömungswiderstand erzeugt die gewünschten dämpfenden Eigenschaften der Kupplung.

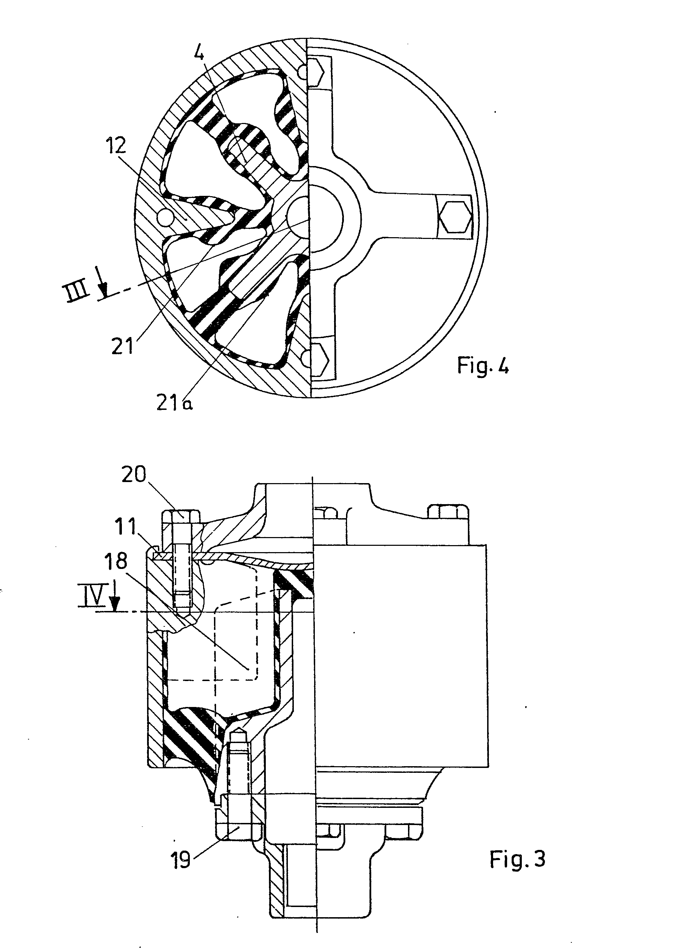

Die in den Figuren 3 und 4 der Zeichnung dargestellte abgewandelte Ausführungsform einer drehelastischen Kupplung der oben beschriebenen Art zeigt einen größeren Oberlappungsbereich 18 (Pumpfläche) von Mitnehmeransatz und Mitnehmerflügel. Darüber hinaus erfolgt hier in konstruktiver Abwandlung die Verbindung der Welle mit dem inneren Nabenkörper durch Schrauben 19, sowie die Verbindung der Welle mit dem Deckel 11 durch Schrauben 2o, wobei die Schrauben 19, 2o jeweils in entsprechende Gewindelöcher der Mitnehmeransätze bzw. Mitnehmerflügel eingeschraubt sind.

Ein wesentlicher Unterschied der Ausführungsform der Kupplung gemäß Fig. 3 und 4 der Zeichnung zur Kupplung nach den Figuren 1 und 2 besteht darin, daß aneinander angrenzende Kammern durch asymmetrische Gummianschläge 21 bzw. 21a auf den Mitnehmeransätzen 4 und den Mitnehmerflügeln 12 unterschiedlich groß ausgebildet sind, so daß in beiden Drehrichtungen unterschiedliche Volumina verdrängt werden können und sich folglich verschiedene Eigenschaften bezüglich der Kinematik, der Federrate und der Dämpfung ergeben.

Patentansprüche

1. Drehelastische Kupplung zur Verbindung zweier im wesentlichen fluchtend zueinander angeordneter Wellen, bestehend aus einem metallischen, sternförmig mit radial nach außen sich erstreckenden Mitnehmeransätzen (4, 5, 6, 7) versehenen Innenteil, einem konzentrisch mit Abstand dieses umgebenden hülsenförmigen metallischen Außenteil (8) und einem zwischen Innenteil und Außenteil verhafteten Gummi-Federelement (9), in welchem mit einem Dämpfungsmittel gefüllte, insbesondere hydraulisch über einen oder mehrere jeweils eine Drosselstelle bildende Oberströmkanäle (17) miteinander verbundene volumenveränderliche Kammern (16) ausgespart sind, dadurch gekennzeichnet, daß die Kammern (16) nach einer Stirnseite hin offen und an dieser Stirnseite der oder die Oberströmkanäle (17) ausgebildet sind, und daß diese Stirnseite durch einen nach dem Befüllen der Kammern (16) mit dem Dämpfungsmedium angebrachten Deckel (11) dicht verschlossen ist.

2. Kupplung nach Anspruch 1, dadurch gekennzeichnet, daß das metallische Außenteil (8) sternförmig mit radial nach innen sich erstreckenden Mitnehmerflügeln (12 bis 15) versehen ist, die zwischen je zwei Mitnehmeransätzen (4 bis 7) des Innenteils (3) angeordnet sind, daß die Mitnehmeransätze (4 bis 7) und -flügel (12 bis 15) als Teil des Gummi-Federelements (9) in Form von radialen Speichen verlängert und durch Vulkanisation mit einem Elastomer mit dem Außenteil (8) und Innenteil (3) unter Ausbildung der Kammerwände verbunden sind, und daß die dem Deckel (11) gegenüberliegende geschlossene Stirnwand als dickwandiger Gummiabschluß ausgebildet ist, der mit einem metallischen Befestigungsflansch (1) verhaftet ist.

3. Kupplung nach Anspruch 2,
   dadurch gekennzeichnet, daß der oder die Überströmkanäle (17) im Deckel (11) und/oder in den Mitnehmerflügeln (12 bis 15) als umlaufende Einprägungen ausgebildet sind, wobei sämtliche Kammern (16) miteinander oder einzelne Kammern paarweise kommunizieren.

4. Kupplung nach Anspruch 2 oder 3,
   dadurch gekennzeichnet,
   daß mindestens drei gleichmäßig versetzt zueinander angeordnete Mitnehmeransätze (4 bis 7) und -flügel (12 bis 15) vorhanden sind.

5. Kupplung nach einem der Ansprüche 2 bis 4,
   dadurch gekennzeichnet,
   daß aufgrund der radialen, gegenläufigen Erstreckung von Mitnehmeransätzen (4 bis 7) und Mitnehmerflügeln (12 bis 15) ein Überlappungsbereich (18) ausgebildet ist.

6. Kupplung nach einem der Ansprüche 1 bis 5,
   dadurch gekennzeichnet,
   daß an den Kammerwänden, insbesondere den Mitnehmeransätzen (4 bis 7) und/oder -flügeln (12 bis 15), elastische Gummianschläge (21, 21a) zur Wegbegrenzung, vorzugsweise in Form von Vorsprüngen, ausgebildet sind.

7. Kupplung nach Anspruch 6,
   dadurch gekennzeichnet,
   daß die Gummianschläge (21, 21a) in beiden
   Drehrichtungen unterschiedlich ausgebildet
   sind.

0023246

1/2

Fig.1

Fig.2

Fig. 4

Fig. 3

## Europäisches Patentamt

# EUROPÄISCHER RECHERCHENBERICHT

| | EINSCHLÄGIGE DOKUMENTE | | | KLASSIFIKATION DER ANMELDUNG (Int Cl⁻¹) |
|---|---|---|---|---|
| Kategorie | Kennzeichnung des Dokuments mit Angabe, soweit erforderlich, der maßgeblichen Teile | betrifft Anspruch | | F 16 D 3/80 |
| A | FR - A - 2 388 164 (BOGE)<br><br>---- | | | |
| | | | | **RECHERCHIERTE SACHGEBIETE (Int Cl.³)**<br><br>F 16 D |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-10-1980 | BARON |

EPA form 1503.1 06.78